(19) Europäisches Patentamt
European Patent Office
Office européen des brevets

(11) Numéro de publication: **0 106 759**
**A2**

(12) # DEMANDE DE BREVET EUROPEEN

(21) Numéro de dépôt: **83401968.9**

(22) Date de dépôt: **07.10.83**

(51) Int. Cl.³: **G 21 F 1/00**

(30) Priorité: **15.10.82 FR 8217279**

(43) Date de publication de la demande:
**25.04.84 Bulletin 84/17**

(84) Etats contractants désignés:
**BE DE GB IT**

(71) Demandeur: **COMMISSARIAT A L'ENERGIE ATOMIQUE**
**Etablissement de Caractère Scientifique Technique et Industriel**
**31/33, rue de la Fédération**
**F-75015 Paris(FR)**

(72) Inventeur: **Bernard, André**
**70, rue de Plateau**
**F-92320 Chatillon-Sous-Bagneux(FR)**

(74) Mandataire: **Mongrédien, André et al,**
**c/o BREVATOME 25, rue de Ponthieu**
**F-75008 Paris(FR)**

(54) **Matériau neutrophage contenant du bore et son procédé de fabrication.**

(57) Matériau neutrophage contenant du bore et son procédé de fabrication.

Ce matériau est constitué parun mortier comprenant des granulats d'un composé minéral du bore, par exemple de la colémanite, du ciment alumineux et de l'eau liée chimiquement, la teneur en bore dudit mortier étant d'au moins $0{,}62.10^{22}$ atomes/cm$^3$ et la teneur en hydrogène dudit mortier étant d'au moins $1{,}42.10^{22}$ atomes/cm$^3$.

Il est utilisable pour la réalisation de murs-écrans, de revêtements et d'éléments d'installation pour l'obtention d'un milieu sous-critique.

EP 0 106 759 A2

La présente invention a pour objet un matériau neutrophage capable d'absorber les neutrons et un procédé de fabrication de ce matériau.

De tels matériaux sont utilisables en particulier dans les installations nucléaires telles que les réacteurs nucléaires et les usines de retraitement de combustibles nucléaires irradiés, où il est nécessaire d'assurer la protection des individus et de l'environnement ainsi que la sous-criticité des installations.

Pour être efficaces de tels matériaux doivent donc réaliser le piégeage de tous les neutrons émis dans l'installation. De ce fait, ils doivent être constitués d'un élément à forte section efficace d'absorption neutronique et d'un élément modérateur de neutrons dont le rôle est d'amener les neutrons à un niveau énergétique optimal pour favoriser leur capture par l'élément à forte section efficace d'absorption neutronique.

Depuis de nombreuses années, des travaux de recherche se sont donc succédés pour développer des matériaux capables d'assurer le piégeage de neutrons de différentes énergies tout en présentant simultanément de bonnes propriétés mécaniques ainsi qu'une bonne stabilité thermique et une bonne stabilité sous irradiation.

La présente invention a précisément pour objet un matériau neutrophage répondant aux caractéristiques précitées.

Le matériau neutrophage, selon l'invention, se caractérise en ce qu'il est constitué par un mortier comprenant des granulats d'un composé minéral du bore, du ciment alumineux et de l'eau liée chimiquement, la teneur en bore du mortier étant d'au moins $0,62.10^{22}$ atomes/$cm^3$ et la teneur en hydrogène dudit mortier étant d'au moins $1,42.10^{22}$ atomes/$cm^3$.

De préférence, le composé minéral du bore comprend au moins 12% en poids de bore, et au moins 2% en poids d'hydrogène.

A titre d'exemple de composés susceptibles d'être utilisés, on peut citer le carbure de bore $B_4C$ et la colémanite qui est un minerai naturel riche en bore et en hydrogène répondant à la formule théorique :

$$3B_2O_3,\ 2CaO,\ 5H_2O$$

De préférence, on utilise la colémanite.

Dans le matériau neutrophage de l'invention, le bore constitue donc l'élément à forte section efficace d'absorption neutronique. L'utilisation de bore se révèle très intéressante car son efficacité reste valable sur une plage relativement étendue du spectre des énergies. Dans le matériau neutrophage de l'invention, l'élément modérateur des neutrons est constitué par l'hydrogène provenant des eaux de cristallisation du ciment et des eaux de constitution du composé minéral de bore.

L'utilisation de colémanite comme constituant boré est particulièrement intéressante car elle permet d'obtenir les densités voulues en atomes d'hydrogène et en atomes de bore et, de ce fait, la meilleure efficacité. En effet, dans un matériau de ce type, la valeur du rapport entre les atomes de bore et d'hydrogène constitue un paramètre important pour obtenir l'efficacité voulue, c'est-à-dire le ralentissement et l'absorption de tous les neutrons. Avantageusement, ce rapport B/H (en atomes) est compris entre 0,35 et 0,45 et, de préférence, égal à 0,4, et ceci peut être atteint facilement avec la colémanite qui contient déjà des atomes d'hydrogène.

Selon l'invention, les granulats du composé minéral de bore ne doivent pas avoir des dimensions trop importantes afin de ne pas dépasser une valeur limite qui est déterminée à partir du libre parcours moyen des neutrons dans la matière, c'est-à-dire de la distance entre deux chocs successifs probables. Avantageusement, les granulats du composé minéral de bore ont une granulométrie de 1 à 3 mm.

De préférence, leur spectre de granulométrie est tel que ces granulats sont constitués de :

- 70 à 100% de particules ayant une granulométrie inférieure à 3,15 mm,
- 40 à 60% de particules ayant une granulométrie inférieure à 2,5 mm,
- 10 à 30% de particules ayant une granulométrie inférieure à 2 mm,
- 5 à 20% de particules ayant une granulométrie inférieure à 1,60 mm,
- 2 à 10% de particules ayant une granulométrie inférieure à 1,25 mm,
- jusqu'à 5% de particules ayant une granulométrie inférieure à 1 mm, et
- jusqu'à 2% de particules ayant une granulométrie inférieure à 0,8 mm.

Le fait d'utiliser, selon l'invention, des granulats de composé minéral de bore présentant des dimensions relativement faibles, permet de plus de répondre aux impératifs de sûreté nucléaire concernant l'homogénéité neutronique du matériau.

Selon l'invention, on utilise pour la réalisation du mortier, un ciment alumineux en raison de sa composition chimique particulière qui lui confère une grande inertie vis-à-vis des composés de bore solubles qui ont généralement la propriété d'annihiler la prise des ciments classiques à forte teneur en silicate de

calcium. De plus, le ciment alumineux présente l'avantage d'apporter dans la structure une quantité d'eau liée chimiquement relativement importante puisqu'elle est au moins égale à 25% du poids du liant.

Généralement, le ciment alumineux a une teneur en $Al_2O_3$ d'au moins 35% en poids.

Selon un mode de réalisation préféré de l'invention, le mortier comprend de 64 à 68% en poids de granulats de colémanite, de 18 à 24% en poids de ciment alumineux et de 10 à 14% en poids d'eau liée chimiquement au ciment.

L'invention a également pour objet un procédé de préparation d'un matériau neutrophage ayant la composition précitée.

Ce procédé consiste :

a) - à mélanger les granulats du composé minéral de bore avec le ciment alumineux pour obtenir un mélange homogène,

b) - à ajouter progressivement de l'eau au mélange ainsi obtenu,

c) - à couler ensuite le mélange à l'endroit voulu, et

d) - à le compacter par vibrations.

Selon l'invention, le mélange peut être utilisé pour la protection de structures, par exemple pour former des revêtements de murs, de sols ou de parois.

On peut aussi couler le mélange dans des coffrages pour réaliser des murs ou des écrans, ou encore d'autres éléments tels que des noyaux cylindriques pleins ou des manchons circulaires.

Lorsqu'on désire obtenir des éléments d'épaisseur relativement importante, on fabrique l'élément en plusieurs étapes en coulant et compactant successivement sans attendre la prise des couches horizontales de mortier de 30 cm d'épaisseur.

On peut aussi inclure dans les éléments des armatures, par exemple des câbles, des fibres ou d'autres produits de renforcement qui sont mis en place avant la coulée du mortier.

D'autres caractéristiques et avantages de l'invention apparaîtront mieux à la lecture de l'exemple suivant de réalisation d'un matériau neutrophage selon l'invention, qui est donné bien entendu à titre illustratif et non limitatif.

On introduit dans la cuve d'un malaxeur 415 kg du ciment alumineux et 1290 kg du sable de colémanite tels que définis plus haut, et on mélange l'ensemble à vitesse lente pendant au moins 2 min. de façon à obtenir un milieu homogène.

On ajoute ensuite progressivement au mélange 332 l d'eau conforme à la norme N.F. P-18-303 et on poursuit le malaxage pendant 2 min., après l'addition de l'eau. On obtient ainsi un mortier qui doit être utilisé au plus tard 1 heure après l'introduction de l'eau.

On coule alors le mortier à l'endroit où il doit être mis en oeuvre et on le soumet à un compactage par vibrations de courtes durées appliquées en différents points. On interrompt les vibrations dès la remontée en surface de la laitance.

Les caractéristiques du mortier de l'invention ont été déterminées par des essais classiques et ont donné les résultats suivants :

- l'ouvrabilité du matériau mesurée au maniabilimètre L.C.P.C. est égale à 15 secondes,
- le temps de prise du mortier mesuré à l'aiguille de Vicat selon la norme N.F. P-15-414 est de 2h 40min., et
- la densité du mortier frais est de 1,95 ± 3%.

On détermine également les propriétés physicomécaniques du mortier durci conservé à l'air et à

température ambiante, telles que la densité, la perte de poids, le retrait et la résistance en traction et en compression après 48 h, après 7 jours et après 28 jours. Les résultats obtenus sont donnés dans le tableau ci-joint.

On détermine également la résistance du mortier au vieillissement en milieu irradiant. Dans ce but, on effectue un essai de vieillissement dans un réacteur expérimental jusqu'à une dose intégrée de $10^{11}$ rad. Dans ces conditions, la perte d'eau du matériau est très faible et reste inférieure à 2% en poids de la quantité initialement présente. Par ailleurs, on constate que l'eau liée chimiquement au ciment et à la colémanite n'est pas altérée pour des températures inférieures à 150°C puisqu'elle est d'environ 335 $l/m^3$. De même, la quantité de bore n'est pas modifiée et reste égale à environ 155 $kg/m^3$.

Ainsi, on constate que le mortier de l'invention présente les caractéristiques voulues pour une utilisation dans de nombreuses installations nucléaires. En effet, ce matériau peut être utilisé, comme revêtement des structures de génie civil telles que les murs-écrans, les sols et les parois ou comme élément de remplissage dans certains appareillages.

A titre d'exemple, on peut l'utiliser pour la réalisation de revêtement de sols et de murs, et l'édification de murs-écrans de 30 cm d'épaisseur séparant des cuves, dans une installation de retraitement d'éléments combustibles irradiés. Dans ce cas, on prévoit de revêtir les éléments d'une peau en acier inoxydable pour permettre la décontamination des cellules et éviter le contact entre les solutions actives et la protection neutronique. On peut aussi l'utiliser sous forme d'écrans atténuateurs en forme de manchons cylindriques de 5 cm d'épaisseur dans des puits de stockage du plutonium.

On peut encore l'utiliser sous la forme de noyaux cylindriques pleins ou de manchons circulaires dans des appareillages tels que des dissolveurs hélicoïdaux, des cuves de stockage de grande capacité ou des colonnes annulaires d'échange afin d'obtenir des appareillages qui soient géométriquement sûrs.

Dans tous les cas, il est préférable de recouvrir les éléments d'une peau métallique étanche afin de pouvoir réaliser ensuite leur décontamination dans de bonnes conditions.

TABLEAU

| Age du mortier | Densité | Perte de poids $\Delta P$ en $kg/m^3$ | Retrait en µm/m | Résistances en traction (MPa) | Résistances en compression (MPa) |
|---|---|---|---|---|---|
| 48 heures | 1,90<br>1,92<br>1,93 | - 52<br>- 48<br>- 50 | - 280<br>- 220<br>- 230 | 3,3<br>3,3<br>3,0 | 13,0<br>13,5<br>13,5 |
| 7 jours | 1,88<br>1,90<br>1,91 | - 72<br>- 73<br>- 68 | - 740<br>- 720<br>- 680 | 3,4<br>3,3<br>3,2 | 17,5<br>18,0<br>18,0 |
| 28 jours | 1,86<br>1,88<br>1,88 | - 92<br>- 96<br>- 92 | - 840<br>- 820<br>- 840 | 3,2<br>3,0<br>3,3 | 19,0<br>19,0<br>18,6 |

REVENDICATIONS

1. Matériau neutrophage, caractérisé en ce qu'il est constitué par un mortier comprenant des granulats d'un composé minéral du bore, du ciment alumineux et de l'eau liée chimiquement, la teneur en bore dudit mortier étant d'au moins $0,62.10^{22}$ atomes/$cm^3$ et la teneur en hydrogène dudit mortier étant d'au moins $1,42.10^{22}$ atomes/$cm^3$.

2. Matériau neutrophage selon la revendication 1, caractérisé en ce que le composé minéral du bore comprend au moins 12% en poids de bore.

3. Matériau neutrophage selon l'une quelconque des revendications 1 et 2, caractérisé en ce que le composé minéral du bore comprend au moins 2% en poids d'hydrogène.

4. Matériau neutrophage selon l'une quelconque des revendications 1 à 3, caractérisé en ce que le rapport entre les atomes de bore et d'hydrogène dudit matériau est compris entre 0,35 et 0,45 et de préférence égal à 0,4.

5. Matériau neutrophage selon la revendication 1, caractérisé en ce que le composé minéral du bore est la colémanite.

6. Matériau neutrophage selon la revendication 5, caractérisé en ce que le mortier comprend de 64 à 68% en poids de granulats de colémanite, de 18 à 24% en poids de ciment alumineux et de 10 à 14% en poids d'eau liée chimiquement au ciment.

7. Matériau selon l'une quelconque des revendications 1 à 6, caractérisé en ce que les granulats du composé minéral de bore ont une granulométrie de 1 à 3 mm.

8. Matériau selon l'une quelconque des revendications 1 à 6, caractérisé en ce que les granulats du composé minéral de bore sont constitués de :

- 70 à 100% de particules ayant une granulométrie inférieure à 3,15 mm,
- 40 à 60% de particules ayant une granulométrie inférieure à 2,5 mm,
- 10 à 30% de particules ayant une granulométrie inférieure à 2 mm,
- 5 à 20% de particules ayant une granulométrie inférieure à 1,60 mm,
- 2 à 10% de particules ayant une granulométrie inférieure à 1,25 mm,
- jusqu'à 5% de particules ayant une granulométrie inférieure à 1 mm, et
- jusqu'à 2% de particules ayant une granulométrie inférieure à 0,8 mm.

9. Matériau selon l'une quelconque des revendications 1 à 8, caractérisé en ce que le ciment alumineux a une teneur en $Al_2O_3$ d'au moins 35% en poids.

10. Procédé de préparation d'un matériau neutrophage selon l'une quelconque des revendications 1 à 9, caractérisé en ce qu'il consiste :

a) - à mélanger les granulats du composé minéral de bore avec le ciment alumineux pour obtenir un mélange homogène,

b) - à ajouter progressivement de l'eau au mélange ainsi obtenu,

c) - à couler ensuite le mélange à l'endroit voulu, et

d) - à le compacter par vibrations.